# EUROPEAN PATENT APPLICATION

(11) **EP 3 085 625 A1**
(43) Date of publication of application: **26.10.2016**
(21) Application number: 16165778.8
(22) Date of filing: 18.04.2016
(51) Int. Cl.: B64D 27/02, F02C 6/14

(54) **EMERGENCY POWER SOURCES FOR PROPULSION SYSTEMS**

(30) Priority: 20.04.2015 US 201514691409
(71) Applicant: Hamilton Sundstrand Corporation, Charlotte, NC 28217 (US)
(72) Inventor: HIMMELMANN, Richard A., Beloit, WI Wisconsin 53511 (US); BOSOMWORTH, Charles E., Somers, CT Connecticut 06071 (US)
(74) Representative: Iceton, Greg James

(57) **Abstract**

A hybrid-electric propulsion system (100) includes a motor drive (102) and a rechargeable energy storage system (104) electrically connected to the motor drive. A gas turbine engine (106) is operatively connected to the motor drive (102) and the rechargeable energy storage system (104). An emergency power source (108) is operatively connected to the motor drive (102). The emergency power source (108) is a primary battery (120) in electrical communication with the motor drive (102). A method for providing emergency power to a hybrid electric propulsion system (100) includes determining whether one of a main engine power source and a rechargeable energy storage system (104) are available for powering a motor drive (102). The method includes initiating a primary battery (120) for powering the motor drive (102) if the main engine power source and the rechargeable energy storage system (104) are unavailable.

## Description

### BACKGROUND OF THE INVENTION

### 1. Field of the Invention

The subject invention relates to hybrid electric propulsion and more particularly to emergency power sources for hybrid electric propulsion systems.

### 2. Description of Related Art

In a cross redundant hybrid-electric pulsed power propulsion system for an aircraft, two hybrid electric propulsion systems can be linked together on a common DC bus. By linking the two systems together, one of the propulsion systems is able to completely shut down its gas turbine engine, allowing the other engine to provide the pulsed propulsion and recharge power to both propulsion systems. This modification allows the operating gas turbine to lengthen its duty cycle (less stops and re-starts), thereby saving additional fuel during the flight, enhancing the fuel economy of the aircraft, and reducing the number of thermal cycles on the gas turbine engine.

While these techniques are satisfactory for their intended purpose, there is still a need for hybrid electric propulsion systems with reduced weight and cost, but that still meet safety requirements. The present disclosure provides a solution for these problems.

### SUMMARY OF THE INVENTION

A hybrid-electric propulsion system includes a motor drive and a rechargeable energy storage system electrically connected to the motor drive. A gas turbine engine is operatively connected to the motor drive and the rechargeable energy storage system. An emergency power source is operatively connected to the motor drive. The emergency power source is a primary battery in electrical communication with the motor drive.

The hybrid-electric propulsion system can include a high-speed electric machine operatively connected between the gas turbine engine and the motor drive. A bi-directional DC to DC converter/battery charger can be electrically connected between the motor drive and the rechargeable energy storage system. The emergency power source can be a single-use emergency power source. The primary battery can be a carbon-zinc battery, a lithium coin battery, an alkaline MnO₂ battery, a lithium cylindrical battery, a Zinc-air battery, a Zinc-Ag₂O battery, and/or a Zinc-HgO battery. An electric propeller and drive motor can be electrically connected to the motor drive. A second motor drive can be operatively connected to the rechargeable energy storage system, the gas turbine engine, and the emergency power source.

A method for providing emergency power to a hybrid electric propulsion system includes determining whether one of a main engine power source and a rechargeable energy storage system are available for powering a motor drive. The method includes initiating a primary battery for powering the motor drive if the main engine power source and the rechargeable energy storage system are unavailable.

These and other features of the systems and methods of the subject invention will become more readily apparent to those skilled in the art from the following detailed description of the preferred embodiments taken in conjunction with the drawings.

### BRIEF DESCRIPTION OF THE DRAWINGS

So that those skilled in the art will readily understand how to make and use the methods and devices disclosed herein without undue experimentation, the methods and devices will be described by way of example only and in detail herein below with reference to certain figures, wherein:
Fig. 1 is a schematic diagram of an exemplary embodiment of a hybrid-electric propulsion system constructed in accordance with the present disclosure, showing three energy sources configured to power two motor drives;
Fig. 2 is a schematic diagram of an exemplary method for providing emergency power to a hybrid electric propulsion system in accordance with embodiments of the present invention, showing operations for initiating an emergency power source;
Fig. 3 is a schematic diagram of another exemplary embodiment of a hybrid-electric propulsion system constructed in accordance with the present disclosure, showing four energy sources configured to power two motor drives; and
Fig. 4 is a schematic diagram of another exemplary embodiment of a hybrid-electric propulsion system constructed in accordance with the present disclosure, showing two energy sources configured to power two motor drives.

### DETAILED DESCRIPTION OF THE PREFERRED EMBODIMENTS

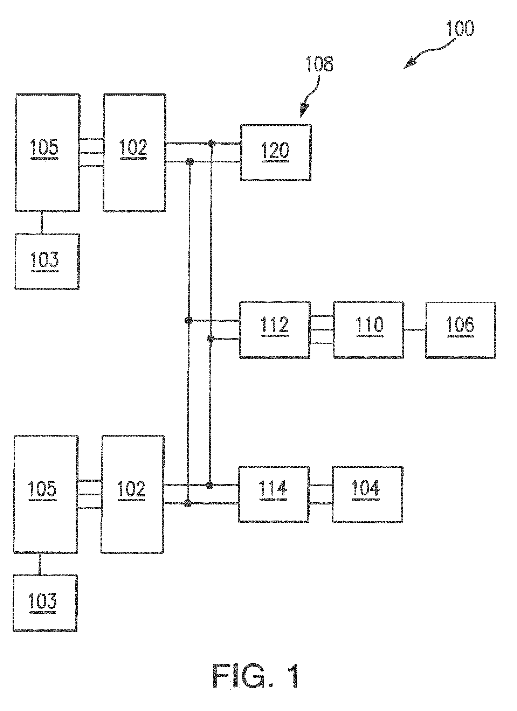

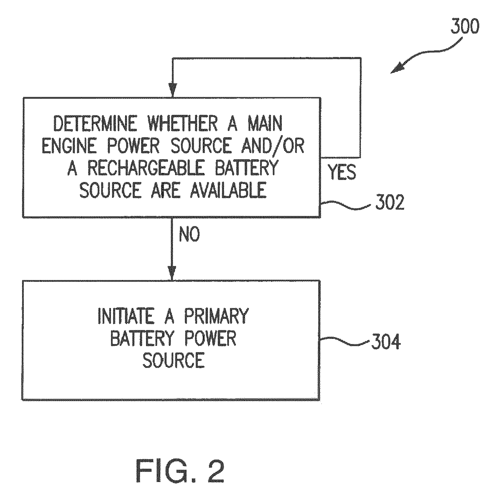

Reference will now be made to the drawings wherein like reference numerals identify similar structural features or aspects of the subject disclosure. For purposes of explanation and illustration, and not limitation, a schematic diagram of an exemplary embodiment of the hybrid-electric propulsion system in accordance with the disclosure is shown in Fig. 1 and is designated generally by reference character 100. Other embodiments of hybrid electric propulsion system in accordance with the disclosure, or aspects thereof, are provided in Figs. 2-4, as will be described.

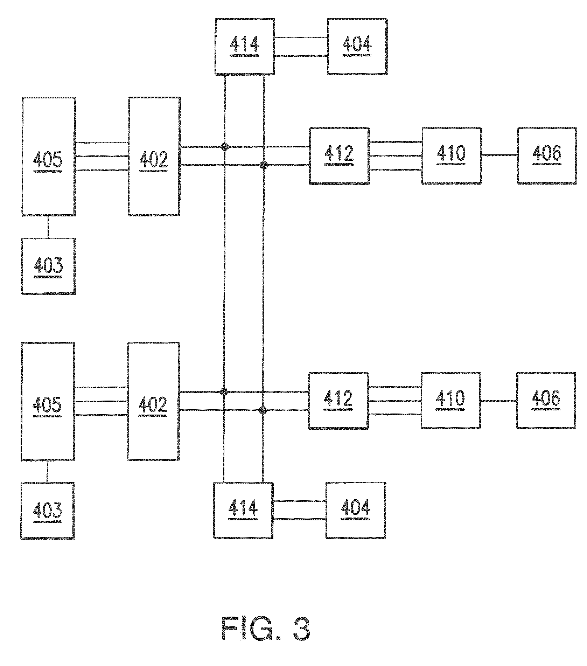

A pulsed power propulsion system is described in U.S. Patent Application No. 14/339,132, filed July 23, 2014. A cross-redundant hybrid electric pulsed power propulsion system 400 for an aircraft is shown in Fig. 3. System 400 includes two motor drives 402 and two rechargeable energy storage systems 404. Each motor drive 402 is electrically connected to a respective drive motor 405 and a respective electric propeller 403. Rechargeable energy storage systems 404 are connected to each motor drive 402. Hybrid-electric propulsion system 400 includes two gas turbine engines 406 operatively connected to each motor drive 402 and to each rechargeable energy storage system 404.

System 400, also described in U.S. Patent Application No. 14/475,146, filed on September 2, 2014, greatly enhances the fuel economy of the aircraft by linking gas turbine engines 406, rechargeable energy storage systems 404 and motor drives 402 together to a common DC bus. Those skilled in the art will readily appreciate that this permits one gas turbine engine to completely shut down while the other engine provides the propulsion and recharge power to both propulsion systems, e.g. motor drives 402 and rechargeable energy storage systems 404. This permits the operating gas turbine engine to lengthen its duty cycle, e.g. less stops and re-starts, thereby saving additional fuel.

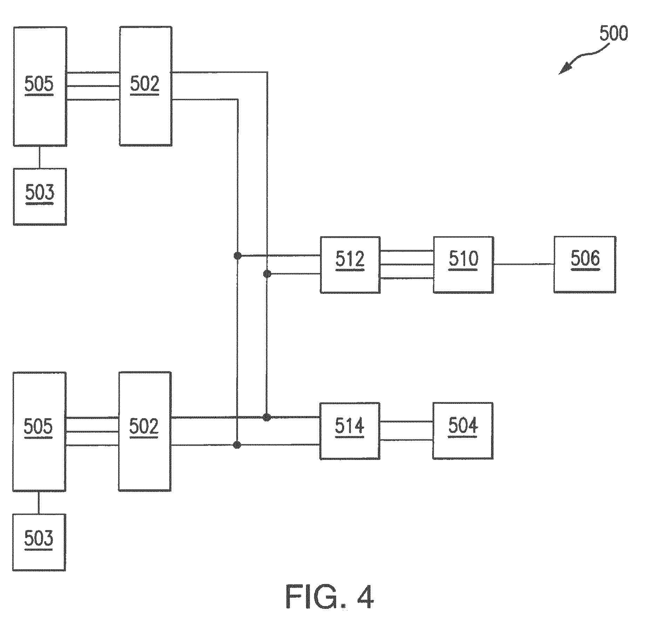

Another embodiment of a cross-redundant hybrid electric pulsed power propulsion system 500, is shown in Fig. 4. System 500 is similar to system 400, except that system 500 includes the elimination of one gas turbine engine entirely. This elimination tends to reduce the purchase price and operation costs of the aircraft. Additionally, this elimination simplifies the propulsion architecture. System 500 also allows the gas turbine engine 506 and rechargeable energy storage system 504 to be positioned in the center of the aircraft. This positioning tends to allow the aircraft original equipment manufacturer (OEM) flexibility as to where they want to place a gas turbine engine, e.g. gas turbine engine 506. For example, an OEM may want to place the gas turbine engine above the fuselage for ground noise mitigation, and boundary layer ingestion, or the like. Additionally, those skilled in the art will readily appreciate that placing the gas turbine engine on the aircraft centerline reduces the forces required to roll the aircraft, thereby decreasing drag during roll maneuvers.

While system 500 would be less costly to purchase and operate, safety considerations generally required at least two gas turbine engines, e.g. gas turbine engines 506, to power the aircraft to insure that the aircraft could continue to fly to the nearest airport in the event of a single engine failure. One way to account for this safety requirement would be to increase the size of the rechargeable energy storage system, e.g. rechargeable energy storage system 504, to contain enough electrical energy to allow the aircraft to fly to the nearest airport in the event of a gas turbine failure. Increasing the size of rechargeable energy storage system 504 would not tend to be a very weight efficient method of providing emergency backup power that may never be used during the life of the aircraft (assuming the engine never fails).

As shown in Fig. 1, a hybrid-electric propulsion system 100 is a cross-redundant hybrid electric pulsed power propulsion system, similar to cross-redundant hybrid electric pulsed power propulsion system 500. However, system 100 includes two motor drives 102 and three different power sources to drive the motor drives 102, as will be described below. Each motor drive 102 is electrically connected to a respective drive motor 105 and a respective electric propeller 103. System 100 includes a rechargeable energy storage system 104 electrically connected to each motor drive 102. System 100 includes a gas turbine engine 106 operatively connected to each motor drive 102 and the rechargeable energy storage system 104. System 100 also includes an emergency power source 108 operatively connected to each motor drive 102.

System 100 includes a first high-speed electric machine 110 operatively connected between gas turbine engine 106 and motor drive 102. System 100 also includes an active bi-directional rectifier/inverter 112 electrically connected between motor drive 102 and high speed electric machine 110. System 100 includes a bi-directional DC to DC converter/battery charger 114 electrically connected between motor drive 102 and rechargeable energy storage system 104. Those skilled in the art will readily appreciate that DC to DC converter/battery charger 114 may not always be necessary as motor drives 102 and active bi-directional rectifier/inverter 112 can each operate off of a varying voltage dc bus. It is contemplated that in the absence of DC to DC converter/battery charger 114, motor drives 102 and/or active bi-directional rectifier/inverter 112 would be given the authority to maintain the dc link voltage at a desired setting. The other electrical components would then become slaves to the voltage set by the controlling element. As with hybrid electric propulsion systems 400 and 500, described above, rechargeable energy storage system 104 is optimized to perform a relatively short duty cycle.

With continued reference to Fig. 1, emergency power source 108 is a primary battery 120, e.g. a single use, non-rechargeable electrical power source. Primary battery 120 is in electrical communication with each motor drive 102. Those skilled in the art will readily appreciate that there can be a DC to DC converter, e.g. similar to DC to DC converter 114, between each motor drive 102 and primary battery 120. Those skilled in the art will readily appreciate that primary battery 120 can be a carbon-zinc battery, a lithium coin battery, an alkaline MnO₂ battery, a lithium cylindrical battery, a Zinc-air battery, a Zinc-Ag₂O battery, and/or a Zinc-HgO battery.

Primary batteries, such as those described above, have the ability to be stored for a long time without losing a large percentage of their stored energy. Additionally, primary batteries have a much higher energy density than that found in a rechargeable energy storage system, e.g. a lithium ion battery. Therefore, primary batteries permit emergency power source 108 to weigh less than an equivalent power source in the form of a larger rechargeable energy storage system and tends to be more reliable and easier to store. These characteristics result in a safe, high energy density emergency power source 108 that can be safely stored for many years on the aircraft when not needed. Those skilled in the art will readily appreciate that there are a variety of suitable single-use primary batteries 120 that can be used in emergency power source.

Emergency power source 108 provides electrical power to hybrid electric propulsion system 100 in the event of failure or shut-down of gas turbine engine 106. Emergency power source 108 provides enough emergency electric power to allow an aircraft powered by system 100 to make a safe, e.g. powered, landing at a nearby airport, even if the gas turbine engine 106, or other intervening components, experience a shut-down failure. For example, emergency power source 108 can meet a variety of emergency electric power requirements depending on the physical size and mass of emergency power source 108.

As shown in Fig. 2, a method for providing emergency power to a hybrid electric propulsion system 300 includes operations 302 and 304. Operation 302 includes determining whether one of a main engine power source, e.g. gas turbine engine 106, and a rechargeable energy storage system, e.g. rechargeable energy storage system 104, are available for powering a motor drive. Operation 304 includes initiating a primary battery, e.g. primary battery 120, for powering the motor drive if the main engine power source and the rechargeable energy storage system are unavailable.

The methods and systems of the present invention, as described above and shown in the accompanying drawings, provide for hybrid-electric aircraft propulsion systems with superior properties including reliable and lightweight cost-effective emergency power systems in case of engine failure. While the apparatus and methods of the subject invention have been shown and described with reference to preferred embodiments, those skilled in the art will readily appreciate that changes and/or modification may be made thereto without departing from the scope of the subject invention.

## Claims

1. A hybrid-electric propulsion system (100) comprising:
a motor drive (102);
a rechargeable energy storage system (104) electrically connected to the motor drive;
a gas turbine engine (106) operatively connected to the motor drive and the rechargeable energy storage system; and
an emergency power source (108) operatively connected to the motor drive, wherein the emergency power source is a primary battery (120) in electrical communication with the motor drive.

2. A hybrid-electric propulsion system as recited in claim 1, further comprising a high-speed electric machine (110) operatively connected between the gas turbine engine and the motor drive.

3. A hybrid-electric propulsion system as recited in claims 1 or 2, further comprising a bi-directional DC to DC converter/battery charger (114) electrically connected between the motor drive and the rechargeable energy storage system.

4. A hybrid-electric propulsion system as recited in any preceding claims, wherein the emergency power source (108) is a single-use emergency power source.

5. A hybrid-electric propulsion system as recited in any preceding claim, wherein the primary battery (120) is a carbon-zinc battery.

6. A hybrid-electric propulsion system as recited in any of claims 1-4, wherein the primary battery (120) is a lithium coin battery.

7. A hybrid-electric propulsion system as recited in any of claims 1-4, wherein the primary battery (120) is an alkaline MnO₂ battery.

8. A hybrid-electric propulsion system as recited in any of claims 1-4, wherein the primary battery (120) is a lithium cylindrical battery.

9. A hybrid-electric propulsion system as recited in any of claims 1-4, wherein the primary battery (120) is a Zinc-air battery.

10. A hybrid-electric propulsion system as recited in any of claims 1-4, wherein the primary battery (120) is a Zinc-Ag₂O battery.

11. A hybrid-electric propulsion system as recited in any of claims 1-4, wherein the primary battery (120) is a Zinc-HgO battery.

12. A hybrid-electric propulsion system as recited in any preceding claim, further comprising an electric propeller (103) and drive motor (105) electrically connected to the motor drive (103).

13. A hybrid-electric propulsion system as recited in any preceding claim, further comprising a second motor drive operatively connected to the rechargeable energy storage system, the gas turbine engine, and the emergency power source.

14. A method for providing emergency power to a hybrid electric propulsion system (100):
determining whether one of a main engine power source and a rechargeable energy storage system (104) are available for powering a motor drive (102); and
initiating a primary battery (120) for powering the motor drive (120) if the main engine power source and the rechargeable energy storage system (104) are unavailable.
